# FASCICULE DE BREVET EUROPEEN

(11) **EP 1 127 778 B1**
(45) Date de publication et mention de la délivrance du brevet: **15.02.2006**
(21) Numéro de dépôt: 01103960.9
(22) Date de dépôt: 19.02.2001
(51) Int. Cl.: B62D 39/00

(54) **Véhicule comportant un système de protection en cas de choc**
Fahrzeug mit einem Aufprallschutzsystem
Vehicle with a protection system against impact

(30) Priorité: 23.02.2000 FR 0002283
(43) Date de publication de la demande: 29.08.2001
(73) Titulaire: Conception et Développement Michelin, 1762 Givizier (CH)
(72) Inventeur: Laurent, Daniel, 1723 Marly (CH); Sebe, Marc, 1723 Marly (CH)
(74) Mandataire: Bauvir, Jacques

(56) Documents cités:
- EP-A- 0 970 879
- DE-A- 19 817 992
- DE-A- 19 909 432
- FR-A- 2 291 896
- GB-A- 1 042 390
- US-A- 5 409 262

## Description

La présente invention concerne les véhicules, notamment les véhicules routiers. Elle se rapporte plus précisément à la sécurité passive de tels véhicules, comme définies dans les revendications 1 et 2. Les caractéristiques des préambules des revendications 1 et 2 sont connues du DE-A-198 17 992.

Les véhicules routiers, notamment les voitures de tourisme, sont à l'heure actuelle conçus avec un grand souci de sécurité. On a l'habitude de distinguer la sécurité active et la sécurité passive. La sécurité active est l'aptitude d'un véhicule à éviter l'accident alors que la sécurité passive est l'aptitude d'un véhicule à protéger efficacement ses occupants lorsque l'accident n'a pu être évité. On range dans cette dernière catégorie les ceintures de sécurité, les coussins gonflables (usuellement appelés " airbags ") se déployant en cas de choc, et également la capacité du véhicule à absorber, par son propre écrasement, une partie de l'énergie cinétique qu'il faut dissiper en cas de choc, tout en préservant pour les occupants une cellule de survie subissant aussi peu de déformations que possible.

On sait maintenant concevoir des caisses pour véhicules de tourisme ayant un habitacle que l'on qualifie usuellement d'indéformable, protégé au moins à l'avant du véhicule par une partie qui se déforme plastiquement pour absorber une partie de l'énergie cinétique du véhicule au moment du choc, et aussi pour diminuer la décélération à laquelle sont soumis les passagers. Il est important de limiter autant que possible la valeur cette décélération pour limiter le risque de traumatisme chez les passagers, ou pour en limiter la gravité. Par ailleurs, on cherche à ce qu'aucun organe mécanique comme le moteur ou le mécanisme de direction ou les tringleries de commande reliés au pédalier ne vienne pénétrer dans l'habitacle. D'où parfois le recours à une conception de l'implantation des organes mécaniques combinée à la forme de la cloison séparant le compartiment moteur de l'habitacle faite pour favoriser un glissement du moteur sous l'habitacle en cas de choc.

L'invention a pour objectif d'améliorer encore la protection des occupants d'un véhicule en cas de collision frontale.

L'invention selon la revendication 1 propose un véhicule ayant un sens préférentiel de roulage sur le sol et comportant :
- à l'avant, un châssis se prolongeant vers l'extrémité avant du véhicule où il comporte une zone d'impact,
- un habitacle pour le transport de passagers, l'habitacle étant autoporteur, l'habitacle ayant un bord avant, une certaine garde étant aménagée entre ladite zone d'impact et ledit bord avant de l'habitacle,
- un organe de liaison formant barre de liaison dont une extrémité est articulée sur le châssis à une zone de liaison au châssis et dont l'autre extrémité est articulée sur l'habitacle à une zone de liaison à l'habitacle, la zone de liaison à l'habitacle étant située à un niveau plus élevé que le niveau de la zone de liaison au châssis, la zone de liaison à l'habitacle étant située en arrière de la zone de liaison au châssis.

La plupart des organes pondéraux du système de motorisation du véhicule sont de préférence attachés au châssis. La notion de sens préférentiel de roulage permet de repérer clairement sur le véhicule un avant et un arrière. Elle permet donc de repérer des zones sur le véhicules dites plus ou moins en arrière ou plus ou moins à l'avant. Elle permet aussi de repérer, le long d'une direction verticale, différents niveaux plus ou moins élevés par rapport au sol.

Un châssis, dans l'acceptation courante de ce terme, est une structure qui porte les organes mécaniques d'une part et l'habitacle d'autre part, et qui détermine au premier ordre la rigidité structurelle du véhicule, notamment sa rigidité de torsion. Cette technique de construction subsiste pour beaucoup de véhicules 4X4. On sait que la technique de la caisse autoporteuse a conduit à supprimer le châssis dans la quasi totalité des véhicules de tourisme produits de nos jours. Cependant, les organes mécaniques comme les moteurs, les boîtes de vitesse, les liaisons au sol ne sont pas toujours pour autant montés chacun individuellement sur la caisse. Il existe ce que l'on appelle des berceaux ou des faux châssis constituant une structure sur laquelle on monte un ensemble d'organes mécaniques, le berceau étant lui-même monté sur la caisse. Dans ce cas, on ne cherche pas à ce que le berceau contribue à la rigidité de la caisse, ses principales fonctions étant de faciliter le montage du véhicule et de contribuer à une meilleure isolation des vibrations.

Le véhicule selon l'invention a en partie l'architecture des véhicules à châssis séparé, si ce n'est qu'un aspect important de l'invention est l'existence d'un habitacle conçu pour offrir aux passagers une cellule de survie. Les organes mécaniques sont agencés de façon à ce que leur masse ne pénalise pas la protection des passagers. D'où le recours à une structure portante et travaillante séparée de l'habitacle, tenant à la fois du châssis parce que ladite structure comporte une rigidité propre comparable à celle que l'on attend des véhicules classiques, et tenant aussi de la technique du berceau parce qu'elle ne s'étend pas nécessairement sur toute la longueur du véhicule et parce qu'elle ne dispense pas de conférer à l'habitacle la rigidité propre que l'on attend des habitacles dits " indéformables ". C'est dans ce sens qu'il faut comprendre le mot " châssis " dans la présente invention.

L'invention sera mieux comprise par la description qui va suivre, concernant une voiture de tourisme à quatre roues, bien que l'exemple donné ne soit pas limitatif. Parmi les figures annexées,
- la figure 1 est une représentation schématique d'un véhicule selon l'invention ;
- la figure 2 est une représentation schématique du même véhicule après un choc frontal ;
- la figure 3 montre une variante de réalisation d'un organe de l'invention, en position de repos ;
- la figure 4 montre le même organe pendant le fonctionnement lors d'un choc ;
- la figure 5 montre le même organe après un choc,
- la figure 6 est une vue de bout du même organe, en position de repos.

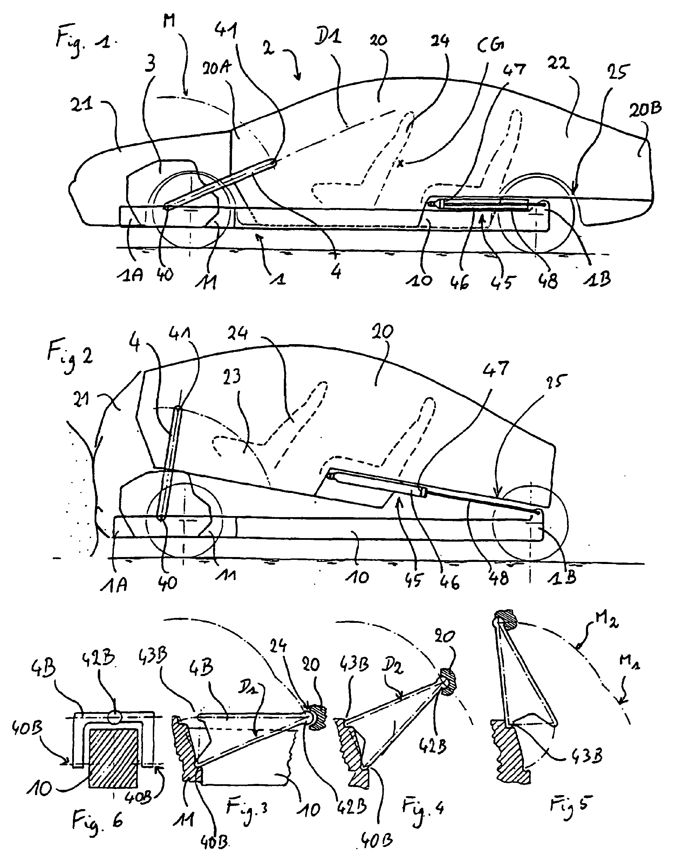

On voit à la figure 1 un véhicule comportant un châssis 1 à poutre centrale 10. Le véhicule comporte une caisse 2 formant un habitacle 20 pour le transport de passagers, un compartiment avant 21 recouvrant les organes mécaniques et un compartiment arrière 22 pouvant recevoir des bagages. L'habitacle 20 comporte des sièges 24 pour accueillir des passagers. L'habitacle peut être pourvu de tout organe convenable contribuant à la protection des passagers, comme des ceintures de sécurité et/ou des sacs gonflables. L'habitacle forme une cellule de survie qui correspond sensiblement au compartiment accueillant des passagers.

A l'avant du véhicule, le châssis 1 comporte un cadre 11 fermé relié vers l'arrière du véhicule à la poutre centrale 10. L'essentiel de la mécanique est logé à l'intérieur du cadre 11. On voit notamment un moteur 3. Peu importe le choix du système de motorisation retenu (moteur thermique classique, moteur électrique, avec transmission aux roues motrices par arbres mécaniques, ou transmission électrique) il y a avantage à rattacher au châssis la plupart des organes pondéraux du système de motorisation du véhicule, ce qui allège d'autant l'habitacle.

Du côté avant, le châssis se termine par une zone d'impact 1A. C'est sur cette zone d'impact que s'exercent les premiers efforts en cas de choc frontal. Cette zone d'impact peut comporter une partie à déformation progressive, ou être précédée à l'avant d'une partie de carrosserie à déformation progressive, de préférence calculée pour absorber les chocs jusqu'à un niveau d'importance moyenne. Autrement dit, le dispositif mécanique destiné à soulever l'habitacle n'intervient pas jusqu'à un certain degré de sévérité d'une collision.

Entre la zone d'impact 1A et la limite avant 20A de l'habitacle 20, il y a une certaine garde, c'est à dire une certaine distance, que l'on met à profit pour autoriser un déplacement de l'habitacle vers l'avant. Ce mouvement relatif entre châssis et habitacle permet de ne soumettre l'habitacle qu'à une décélération très inférieure à celle du châssis. C'est le rôle du dispositif mécanique pour soulever au moins l'avant de l'habitacle par rapport au châssis.

Aux figures 1 et 2, on voit une biellette 4 formant une sorte de bascule. C'est l'organe de liaison dans cet exemple. En pratique, il y a de préférence au moins deux biellettes montées de façon à former une triangulation dans un plan transversal, afin que l'habitacle ne puisse pas se déplacer latéralement par rapport au châssis. La biellette 4 prend appui sur le châssis à un premier niveau que l'on peut repérer sur les figures 1 et 2 par l'axe d'articulation 40. Cette articulation 40 est montée sur le châssis 1 de façon à ce que son axe géométrique soit sensiblement horizontal et perpendiculaire au sens préférentiel de roulage. Il peut s'agir d'une véritable articulation, ou encore de toute solution technique d'effet équivalent réalisant une pseudo articulation. Ce peut être un amincissement localisé de matière dans une pièce structurelle continue formant à la fois le châssis et la biellette.

La fonction de l'organe de liaison est de soulever au moins l'avant de l'habitacle par rapport au châssis, celui-ci étant capable de se déplacer vers l'avant par rapport au châssis en cas de choc. L'organe de liaison agit comme une barre de liaison ; cela signifie que, vu dans un plan longitudinal tel que le plan de la figure 1 ci-dessus, il n'y a pas d'autre barre dans la liaison de l'habitacle au châssis à l'avant de l'habitacle.

L'essentiel est donc d'assurer la fonction de soulèvement de l'habitacle grâce à son inertie lors d'un choc avant, par tout moyen approprié. A cette fin, la bascule reçoit l'habitacle 20 à un deuxième niveau plus élevé que le premier niveau, la zone de réception de l'habitacle étant située en arrière par rapport à la zone d'appui sur le châssis. On peut repérer ce deuxième niveau sur les figures 1 et 2 par l'articulation 41. Ce qui a été dit ci-dessus à propos de l'articulation 40 s'applique aussi à l'articulation 41.

L'axe géométrique de la ou desdites articulations est avantageusement unique. De préférence, afin de faciliter le soulèvement de l'habitacle, en considérant dans le plan de symétrie du véhicule, la projection du point représentatif de l'articulation à l'habitacle (voir 41) et du point représentatif de l'articulation au châssis (voir 40), la droite (D₁) reliant les points représentatifs passe au dessus du centre de gravité (CG) de l'habitacle (voir figure 1). En variante ou en complément, on peut aussi faciliter le soulèvement de l'habitacle en utilisant une charge pyrotechnique et des moyens de détection de choc pour déclencher sa mise à feu, la charge pyrotechnique aidant au soulèvement de l'habitacle par rapport au châssis par exemple en exerçant un effort vertical sous la ou les bascules.

La consultation comparative des figures 1 et 2 permet de bien comprendre comment on a organisé le mouvement de soulèvement de l'avant de l'habitacle 20, en faisant pivoter l'articulation 41 autour de l'articulation 40, comme montré par le trait M.

Dans une variante de réalisation très adaptée au cas du châssis à poutre centrale 10, l'organe de liaison forme une bascule comportant essentiellement par une pièce 4B (voir figures 3 à 6) montée à cheval par dessus la poutre centrale, et articulée sur la poutre centrale et de part et d'autre de celle-ci par une articulation (40B) dont l'axe géométrique est sensiblement horizontal et perpendiculaire au sens préférentiel de roulage.

La variante de réalisation illustrée aux figures 3 et suivantes montre un autre détail de réalisation non limitatif, mais avantageux pour éviter la transmission de vibrations à l'habitacle. On voit à la figure 3 que l'organe de liaison n'est pas en contact avec l'habitacle 20, mais qu'il est prêt à le recevoir en cas de choc. La ou les bascules tenant lieu d'organe de liaison se terminent côté habitacle par un butoir 42B monté en regard d'une portée 24 écartée en arrière par rapport au butoir. Il subsiste donc un léger jeu entre bascule et habitacle. L'habitacle est par ailleurs monté sur le châssis par des liaisons autorisant un mouvement relatif entre châssis et habitacle parallèlement au sens préférentiel de roulage en cas de choc, par exemple par des liaisons comportant du caoutchouc entre deux armatures. La déformation du caoutchouc permet aisément d'autoriser les déplacements relatifs appropriés entre châssis et habitacle. La portée 24 permet de transmettre au butoir la poussée exercée par la caisse en cas de choc.

Le mode de réalisation de la bascule 4B comporte aussi une variante côté articulation de la bascule sur le châssis 1. On voit que l'articulation se décompose en une première articulation 40B, puis une seconde articulation 43B. Lesdites articulations 40B et 43B d'une part et le butoir 42B formant articulation côté habitacle d'autre part sont positionnées de façon à ce que, en position de repos comme montré à la figure 3, la droite D₁ reliant la première articulation 40B au butoir 42B passe au dessus du centre de gravité de l'habitacle, et au cours du basculement, lorsque la deuxième articulation 43B se met en appui contre le châssis 1 comme montré à la figure 4, la droite D₂ reliant la deuxième articulation 43B au butoir 42B passe au dessus du centre de gravité de l'habitacle. Cela permet de soulever l'habitacle plus haut, sans pénaliser l'amorce du mouvement de soulèvement, en faisant décrire à l'articulation côté habitacle deux arcs de cercle successifs M₁ et M₂.

Il est préférable de guider également l'arrière de l'habitacle par rapport au châssis. En revenant aux figures 1 et 2, on voit un mode de réalisation particulier mais non limitatif d'un tel guidage. Le châssis 1 se prolonge vers l'arrière du véhicule, et la partie arrière de l'habitacle et plus précisément ici son prolongement constitué par le compartiment à bagages, est montée sur le châssis par un moyen formant glissière 25 orientée dans le sens de roulage. Cela permet de contraindre l'habitacle à s'incliner au cours de son soulèvement De la sorte, l'assise 23 des sièges 24 offre une aide pour retenir les passagers.

On voit également un amortisseur 45 actionné par le mouvement relatif entre habitacle 20 et châssis 1. Bien que l'on dissipe une partie de l'énergie en soulevant une charge lors du choc, on peut augmenter la dissipation en installant un amortisseur à cet effet. Cet amortisseur 45 comporte un réservoir tubulaire 46 rempli d'un fluide visqueux et dans lequel peut se déplacer une paroi 47 comportant au moins un orifice calibré, l'amortissement provenant du laminage du fluide visqueux forcé à passer d'un côté à l'autre de la paroi, la paroi étant tractée à l'intérieur du réservoir par un câble 48, le câble et le réservoir étant solidaires l'un de l'habitacle et l'autre du châssis. Dans la réalisation proposée, c'est le câble qui est relié à l'extrémité arrière 1B du châssis 1. Notons que le porte-à-faux au delà du châssis que forme le compartiment à bagage 22 solidaire de l'habitacle rend aussi possible le soulèvement de l'habitacle en cas de choc arrière. Il est donc avantageux que l'habitacle 20 présente un bord arrière 20B situé plus en arrière que l'extrémité arrière 1B du châssis 1.

Remarquons encore que l'invention permet aussi de monter l'habitacle 20 sur le châssis 1 de façon inclinable autour d'un axe longitudinal situé dans le plan de symétrie du véhicule. On consultera à ce sujet la demande de brevet EP 0 878 378. On y voit que l'habitacle est monté sur un châssis de façon à pouvoir former un angle de roulis variable, des moyens de commande étant interposés entre le châssis et l'habitacle. On peut alors contrôler de façon positive ledit angle de roulis. On peut combiner cette disposition avec la présente invention en positionnant la zone de liaison à l'habitacle sensiblement sur l'axe longitudinal autour duquel l'habitacle peut être incliné.

Sur la base de ce qui vient d'être exposé, l'homme du métier pourra procéder à des adaptations selon ses propres souhaits sans sortir du cadre de la présente invention. Par exemple, on pourrait en plus soulever l'arrière de l'habitacle en disposant judicieusement une ou plusieurs autres bascules. Dans le cas où l'on souhaite éviter tout contact permanent de la ou des bascules pour éviter la transmission de vibration, on peut bien entendu laisser un jeu entre châssis et bascule plutôt qu'entre habitacle et bascule.

## Revendications

1. Véhicule ayant un sens préférentiel de roulage sur le sol et comportant :
• à l'avant, un châssis (1) se prolongeant vers l'extrémité avant du véhicule où il comporte une zone d'impact (1A),
• un habitacle (20) pour le transport de passagers, l'habitacle étant autoporteur, l'habitacle ayant un bord avant (20A), une certaine garde étant aménagée entre ladite zone d'impact et ledit bord avant de l'habitacle,
• un organe de liaison formant barre de liaison dont une extrémité est articulée sur le châssis (1) à une zone de liaison au châssis et dont l'autre extrémité est articulée sur l'habitacle (20) à une zone de liaison à l'habitacle, la zone de liaison à l'habitacle étant située en arrière de la zone de liaison au châssis, **caractérisé en ce que** la zone de liaison à l'habitacle étant située à un niveau plus élevé que le niveau de la zone de liaison au châssis.

2. Véhicule ayant un sens préférentiel de roulage sur le sol et comportant :
• à l'avant, un châssis (1) se prolongeant vers l'extrémité avant du véhicule où il comporte une zone d'impact (1A),
• un habitacle (20) pour le transport de passagers, l'habitacle étant autoporteur, l'habitacle ayant un bord avant (20A), une certaine garde étant aménagée entre ladite zone d'impact et ledit bord avant de l'habitacle,
• un organe de liaison formant barre de liaison dont une extrémité est articulée sur le châssis (1) à une zone de liaison au châssis et dont l'autre extrémité est articulée sur l'habitacle (20) à une zone de liaison à l'habitacle, **caractérisé en ce que** l'organe de liaison étant agencé pour soulever au moins l'avant de l'habitacle (20) par rapport au châssis (1) pendant que l'habitacle se déplace vers l'avant par rapport au châssis en cas de choc.

3. Véhicule selon la revendication 1 ou 2 dans lequel l'organe de liaison est montée sur le châssis par une articulation (40) dont l'axe géométrique est sensiblement horizontal et perpendiculaire au sens de roulage.

4. Véhicule selon la revendication 1 ou 2 dans lequel ledit châssis (1) comporte une poutre centrale (10), et dans lequel au moins l'organe de liaison forme une bascule comportant essentiellement une pièce (4B) montée à cheval par dessus la poutre centrale, montée sur la poutre centrale et de part et d'autre de celle-ci par une articulation (40B) dont l'axe géométrique est sensiblement horizontal et perpendiculaire au sens préférentiel de roulage.

5. Véhicule selon l'une des revendications 3 ou 4 dans lequel l'axe géométrique de la ou desdites articulations est unique et dans lequel, dans le plan de symétrie du véhicule, en considérant dans le plan médian le point représentatif de l'articulation à l'habitacle et le point représentatif de l'articulation au châssis, la droite (D₁) reliant les points représentatifs passe au dessus du centre de gravité (CG) de l'habitacle.

6. Véhicule selon l'une des revendications 1 à 5, comportant une charge pyrotechnique et des moyens de détection de choc pour déclencher sa mise à feu, la charge pyrotechnique aidant au soulèvement de l'habitacle par rapport au châssis.

7. Véhicule selon l'une des revendications 1 à 6, dans lequel l'habitacle est monté sur le châssis par des liaisons autorisant un mouvement relatif entre châssis et habitacle parallèlement au sens préférentiel de roulage en cas de choc, et dans lequel l'organe de liaison se termine côté habitacle par un butoir (42B) monté en regard d'une portée (24) écartée en arrière par rapport au butoir, et permettant de transmettre au butoir la poussée exercée par la caisse en cas de choc.

8. Véhicule selon l'une des revendications 1 à 7, dans lequel le châssis se prolonge vers l'arrière du véhicule, et dans lequel la partie arrière de l'habitacle est montée sur le châssis par un moyen formant glissière (25) orientée dans le sens préférentiel de roulage.

9. Véhicule selon l'une des revendications 1 à 8, comportant un amortisseur (45) actionné par le mouvement relatif entre habitacle (20) et châssis (1).

10. Véhicule selon les revendications 8 et 9, dans lequel ledit amortisseur comporte un réservoir tubulaire (46) rempli d'un fluide visqueux et dans lequel peut se déplacer une paroi (47) comportant au moins un orifice calibré, l'amortissement provenant du laminage du fluide visqueux forcé à passer d'un côté à l'autre de la paroi, la paroi étant tractée à l'intérieur du réservoir par un câble (48), le câble et le réservoir étant solidaires l'un de l'habitacle et l'autre du châssis.

11. Véhicule selon l'une des revendications 1 à 10, dans lequel l'habitacle (20) présente un bord arrière (20B) situé plus en arrière que l'extrémité arrière (1B) du châssis (1).

## Patentansprüche

1. Fahrzeug mit einer bevorzugten Fahrtrichtung am Boden, das aufweist:
■ vorne ein Fahrgestell (1), das sich zum vorderen Ende des Fahrzeugs verlängert, wo es eine Aufprallzone (1A) aufweist,
■ eine Fahrgastzelle (20) für den Transport von Fahrgästen, wobei die Fahrgastzelle selbsttragend ist, wobei die Fahrgastzelle eine Vorderkante aufweist, wobei eine gewisse Freiheit zwischen der Aufprallzone und der Vorderkante der Fahrgastzelle ausgestaltet ist,
■ ein Verbindungselement, das eine Verbindungsstange bildet, von der ein Ende am Fahrgestell (1) in einer Verbindungszone mit dem Fahrgestell und das andere Ende an der Fahrgastzelle (20) in einer Verbindungszone mit der Fahrgastzelle angelenkt ist, wobei die Verbindungszone mit der Fahrgastzelle sich hinter der Verbindungszone mit dem Fahrgestell befindet, **dadurch gekennzeichnet, dass** die Verbindungszone mit der Fahrgastzelle sich auf einem höheren Niveau befindet als die Verbindungszone mit dem Fahrgestell.

2. Fahrzeug mit einer bevorzugten Fahrtrichtung am Boden, das aufweist:
• vorne ein Fahrgestell (1), das sich zum vorderen Ende des Fahrzeugs verlängert, wo es eine Aufprallzone (1A) aufweist,
• eine Fahrgastzelle (20) für den Transport von Fahrgästen, wobei die Fahrgastzelle selbsttragend ist, wobei die Fahrgastzelle eine Vorderkante (20A) aufweist, wobei eine gewisse Freiheit zwischen der Aufprallzone und der Vorderkante der Fahrgastzelle ausgestaltet ist,
• ein Verbindungselement, das eine Verbindungsstange bildet, von der ein Ende am Fahrgestell (1) in einer Verbindungszone mit dem Fahrgestell angelenkt ist und das andere Ende an die Fahrgastzelle (20) in einer Verbindungszone mit der Fahrgastzelle angelenkt ist, **dadurch gekennzeichnet, dass** das Verbindungselement ausgelegt ist, um mindestens den vorderen Bereich der Fahrgastzelle (20) bezüglich des Fahrgestells (1) anzuheben, während die Fahrgastzelle sich bei einem Aufprall bezüglich des Fahrgestells nach vorne bewegt.

3. Fahrzeug nach Anspruch 1 oder 2, bei dem das Verbindungselement über ein Gelenk (40) auf das Fahrgestell montiert ist, dessen geometrische Achse im Wesentlichen waagrecht und lotrecht zur Fahrtrichtung ist.

4. Fahrzeug nach Anspruch 1 oder 2, bei dem das Fahrgestell (1) einen Mittelträger (10) aufweist und bei dem zumindest das Verbindungselement eine Kippvorrichtung bildet, die hauptsächlich ein Bauteil (4B) aufweist, das über dem Mittelträgers aufsitzend und am Mittelträger zu dessen beiden Seiten über ein Gelenk (40B) montiert ist, dessen geometrische Achse im Wesentlichen waagrecht und lotrecht zur bevorzugten Fahrtrichtung ist.

5. Fahrzeug nach einem der Ansprüche 3 oder 4, bei dem es nur eine geometrische Achse des oder der Gelenke gibt und bei dem in der Symmetrieebene des Fahrzeugs, wenn man in der Mittelebene den für die Anlenkung an die Fahrgastzelle repräsentativen Punkt und den für die Anlenkung an das Fahrgestell repräsentativen Punkt betrachtet, die die repräsentativen Punkte verbindende Gerade (D₁) oberhalb des Schwerpunkts (CG) der Fahrgastzelle verläuft.

6. Fahrzeug nach einem der Ansprüche 1 bis 5, das eine pyrotechnische Ladung und Mittel zur Erfassung eines Aufpralls aufweist, um ihre Zündung auszulösen, wobei die pyrotechnische Ladung zum Anheben der Fahrgastzelle bezüglich des Fahrgestells beiträgt.

7. Fahrzeug nach einem der Ansprüche 1 bis 6, bei dem die Fahrgastzelle über Verbindungen auf das Fahrgestell montiert ist, die bei einem Aufprall eine relative Bewegung zwischen Fahrgestell und Fahrgastzelle parallel zur bevorzugten Fahrtrichtung erlauben, und bei dem das Verbindungselement auf der Seite der Fahrgastzelle in einem Puffer (42B) endet, der vor einem Ausleger (24) montiert ist, der bezüglich des Puffers nach hinten verschoben ist, und es ermöglicht, den vom Wagenkasten im Fall eines Aufpralls ausgeübten Schub auf den Puffer zu übertragen.

8. Fahrzeug nach einem der Ansprüche 1 bis 7, bei dem das Fahrgestell sich zur Rückseite des Fahrzeugs verlängert, und bei dem der hintere Bereich der Fahrgastzelle über eine eine Gleitschiene (25) bildende Einrichtung auf das Fahrgestell montiert ist, die in der bevorzugten Fahrtrichtung ausgerichtet ist.

9. Fahrzeug nach einem der Ansprüche 1 bis 8, das einen Stoßdämpfer (45) aufweist, der durch die relative Bewegung zwischen Fahrgastzelle (20) und Fahrgestell (1) betätigt wird.

10. Fahrzeug nach den Ansprüchen 8 und 9, bei dem der Stoßdämpfer ein rohrförmiges Reservoir (46) aufweist, das mit einem viskosen Fluid gefüllt ist und in dem sich eine Wand (47) verschieben kann, die mindestens eine kalibrierte Öffnung aufweist, wobei die Dämpfung durch die Abflussreduktion des viskosen Fluids erzeugt wird, das dazu gezwungen wird, von einer Seite der Wand zur anderen überzugehen, wobei die Wand durch ein Seil (48) ins Innere des Reservoirs gezogen wird, wobei das Seil und das Reservoir fest mit der Fahrgastzelle bzw. mit dem Fahrgestell verbunden sind.

11. Fahrzeug nach einem der Ansprüche 1 bis 10, bei dem die Fahrgastzelle (20) eine Heckkante (20B) aufweist, die weiter hinten liegt als das hintere Ende (1B) des Fahrgestells (1).

## Claims

1. Vehicle having a preferential rolling direction over the ground and comprising:
• at the front, a chassis (1) extending towards the front end of the vehicle where it comprises an impact zone (1A),
• a cabin (20) for the transport of passengers, the cabin being self-supporting and having a front edge (20A), a certain distance being provided between said impact zone and said front edge of the cabin,
• a connection element forming a connecting bar one end of which is articulated to the chassis (1) at a chassis connection zone and the other end of which is articulated to the cabin (20) at a cabin connection zone, the cabin connection zone being positioned behind the chassis connection zone, **characterised in that** the cabin connection zone is positioned at a higher level than the level of the chassis connection zone.

2. Vehicle having a preferential rolling direction over the ground and comprising:
• at the front, a chassis (1) extending towards the front end of the vehicle where it comprises an impact zone (1A),
• a cabin (20) for the transport of passengers, the cabin being self-supporting and having a front edge (20A), a certain distance being provided between the said impact zone and the said front edge of the cabin,
• a connection element forming a connecting bar one end of which is articulated to the chassis (1) at a chassis connection zone and the other end of which is articulated to the cabin (20) at a cabin connection zone, **characterised in that** the connecting element is arranged so as to raise at least the front of the cabin (20) relative to the chassis (1) while the cabin moves towards the front relative to the chassis in the event of an impact.

3. Vehicle according to Claim 1 or 2, in which the connecting element is mounted on the chassis by an articulation (40) whose geometrical axis is substantially horizontal and perpendicular to the rolling direction.

4. Vehicle according to Claim 1 or 2, in which the said chassis (1) comprises a central strut (10) and in which at least one connecting element forms a rocker essentially comprising a component (4B) mounted astride over the central strut and is mounted on the central strut and either side of it by an articulation (40B) whose geometrical axis is substantially horizontal and perpendicular to the preferential rolling direction.

5. Vehicle according to one of Claims 3 or 4, in which the geometrical axis of the said articulation(s) is a single one and in which, in the vehicle's plane of symmetry, considering the point representing the articulation to the cabin and the point representing the articulation to the chassis in the median plane, the straight line (D₁) connecting the representative points passes above the centre of gravity (CG) of the cabin.

6. Vehicle according to one of Claims 1 to 5, comprising a pyrotechnic charge and impact detection means to trigger its ignition, the pyrotechnic charge assisting the raising of the cabin relative to the chassis.

7. Vehicle according to one of Claims 1 to 6, in which the cabin is mounted on the chassis by connections that allow a relative movement between the chassis and the cabin parallel to the preferential rolling direction in the event of impact, and in which the connecting element terminates on the cabin side in an end-stop (42B) mounted opposite a bearing surface (24) located a short distance behind the end-stop, which allows the thrust exerted by the body in the event of an impact to be transmitted to the end-stop.

8. Vehicle according to one of Claims 1 to 7, in which the chassis extends towards the rear of the vehicle and in which the rear portion of the cabin is mounted on the chassis by an element forming a slide (25) orientated in the preferential rolling direction.

9. Vehicle according to one of Claims 1 to 8, comprising a damper (45) actuated by the relative movement between the cabin (20) and the chassis (1).

10. Vehicle according to Claims 8 and 9, in which the said damper comprises a tubular reservoir (46) filled with a viscous fluid in which a partition wall (47) comprising at least one calibrated orifice can move, the damping resulting from the throttling effect when the viscous fluid is forced to flow from one side of the partition to the other, the partition being drawn within the reservoir by a cable (48), the cable and the reservoir being attached one to the cabin and the other to the chassis.

11. Vehicle according to one of Claims 1 to 10, in which the cabin (20) has a rear edge (20B) located further to the rear than the rear end (1B) of the chassis (1).
